# EUROPÄISCHE PATENTANMELDUNG

(11) **EP 2 821 131 A1**
(43) Veröffentlichungstag der Anmeldung: **07.01.2015**
(21) Anmeldenummer: 14002264.1
(22) Anmeldetag: 02.07.2014
(51) Int. Cl.: B01F 15/00, B01F 15/04, B01F 3/08, C02F 1/00, C02F 1/42, C02F 5/00, F24D 19/00, C02F 103/02

(54) **Vorrichtung zum Konditionieren von Wasser für wasserführende Kreislaufsysteme**

(30) Priorität: 02.07.2013 DE 102013010991
(71) Anmelder: AEW Wassertechnologie GmbH, 21218 Seevetal-Hittfeld (DE)
(72) Erfinder: Bürgel, Dietrich, 20535 Hamburg (DE); Jungmann, Hans-Peter, 21385 Amelinghausen (DE)
(74) Vertreter: Wetzel, Philipp

(57) **Zusammenfassung**

Vorrichtung zum Konditionieren von Wasser zum Befüllen von wasserführenden Kreislaufsystemen mit einem Element (14) zur Einstellung der Leitfähigkeit des konditionierten Kreislaufwassers, und einem Steuerelement (28), wobei die Vorrichtung (10) so ausgeführt ist, dass mittels eines Mischerelements (13) mit einem Leitungsweg (16) ein Teilvolumenstrom des eingeleiteten Befüllwassers am Element (14) zur Einstellung der Leitfähigkeit vorbeiführbar ist, das Verschneideelement (60) einen Verschnittbereich (20) aufweist, der gedreht zum Leitungsweg (16) vorgesehen ist, dass das Verschneideelement (60) einen Strömungsumlenkungsabschnitt (67) aufweist, der mit dem Leitungsweg (16) verbunden ist und der die Strömungsrichtung des unkonditionierten Wassers in den Verschnittbereich (20) ändert und dass der Verschnittbereich (20) einen Eintrittabschnitt (69) für das konditionierte Wasser aufweist, der so ausgeführt ist, dass das konditionierte Wasser im Wesentlichen radial in der Verschnittbereich (20) eintritt.

## Beschreibung

Die Erfindung betrifft eine Vorrichtung zum Konditionieren von Wasser zum Befüllen von wasserführenden Kreislaufsystemen mit wenigstens einem Zuleitungsanschluss für Befüllwasser und einem Ableitungsanschluss für konditioniertes Kreislaufwasser, einem Element zur Einstellung der Leitfähigkeit des konditionierten Kreislaufwassers und einem Steuerelement, wobei die Vorrichtung so ausgeführt ist, dass ein Teilvolumenstrom des Befüllwassers an dem Element zur Einstellung der Leitfähigkeit des Befüllwassers vorbeiführbar ist, und mit dem in dem Element zur Einstellung der Leitfähigkeit konditionierten Wasser verschneidbar ist, wobei der Teilvolumenstrom einstellbar ist, wobei zur Einstellung des Teilvolumenstromes über den hydraulischen Widerstand des Mischelements am Leitungsweg ein Verschneideelement vorgesehen ist, das ein Regelventilelement beinhaltet, über das die Durchflussmenge einstellbar ist.

Unter wasserführenden Kreislaufsystemen werden Heizungskreisläufe von Warmwasserheizungsanlagen, Kühlkreisläufe, Kältekreisläufe, Erdwärmekreisläufe und Solarkreisläufe verstanden.

Es ist heutzutage üblich, ein Gebäude über wasserführende Kreislaufsysteme zu erwärmen oder zu kühlen. Als Basis hierzu dient in der Regel Leitungswasser. Bei der Verwendung von reinem Leitungswasser tritt das Problem auf, dass die im Wasser enthaltenen Stoffe ausfallen können, Ablagerungen und Verschlammungen in dem Kreislaufsystem auftreten und darüber hinaus Korrosionen und die daraus resultierenden Korrosionsrückstände ausfallen können. Bei neu errichteten Kreislaufsystemen muss dieser Entwicklung bereits bei der Befüllung der Kreislaufsysteme entgegengewirkt werden. Hierfür muss beispielsweise nach der Vorschrift VDI 2035 u. a., eine Konditionierung des Kreislaufsystems vorgenommen werden. Dieses ist insbesondere deswegen notwendig, weil in Deutschland nach der VDI 2035 u. a. es den Herstellern von Anlagen und Komponenten möglich ist, Gewährleistungs- und Garantieansprüche zurückzuweisen, wenn es dem Anlagenbetreiber nicht möglich ist, nachzuweisen, dass richtlinienkonform konditioniertes Wasser eingesetzt wurde. Dieses ist insbesondere bei privaten Haushalten schwierig nachzuweisen.

Aus DE 2007 055 132 A1 ist eine Überwachungs- und Diagnosearmatur für Heizungswasser bekannt. Die Vorrichtung wird in den Heizkreis integriert und weist eine Messsensorik für die Messung des pH-Werts, die elektrische Leitfähigkeit und zur Trübemessung auf. Des Weiteren weist die Vorrichtung einen Füllwasseranschluss mit Durchflussmengenmesser auf. Eine Auswerteeinheit vergleicht die ermittelten Sensordaten mit Sollwerten. Wird ein solcher Sollwert überschritten, wird von der Vorrichtung eine Alarmmeldung ausgegeben. Eine solche Vorrichtung eignet sich für große Heizungsanlagen, bei denen dann im Alarmfall aktiv durch eine Person Handlungen zur Einstellung des Heizungswassers vorgenommen werden.

Aus DE 101 55 946 A1 ist ein Verfahren zur Vermeidung von Schäden an Heizkesseln durch Kesselsteinbildung offenbart. Dabei wird in eine Füllleitung ein Ionentauscher integriert, durch den eine Vollentsalzung des Wassers, das der Heizungsanlage zugeführt wird, gewährleistet wird.

DE 20 2010 004 292 U1 offenbart ein Modul zur Aufbereitung von Heizungskreislaufwasser. Dieses Modul umfasst einen Frischwasseranschluss zur Befüllung des Heizungskreises. Zentrales Element ist ein Gehäuse, in dem ein Einsatz einsetzbar ist. Dieser Einsatz ist auswechselbar. Ein offenbarter Einsatz ist dabei die Enthärtung und Entsalzung des zugeführten Wassers. Dafür ist eine Leitfähigkeitsmessung vorgesehen. Es hat sich allerdings ergeben, dass das Vorsehen von vollentsalztem Befüllwasser in Verbindung mit Sauerstoff zu Problemen hinsichtlich Korrosion innerhalb der Heizungsanlage führen kann.

Eine Verbesserung gegenüber den vorgenannten Vorrichtungen ist aus der DE 10 2010 044 567 A1 bekannt. Diese zeigt eine Vorrichtung gemäß Oberbegriff. Es hat sich gezeigt, dass diese Vorrichtung hinsichtlich des Mischens des konditionierten und des unkonditionierten Wassers optimierbar ist. Insbesondere die Regelbarkeit sei hier genannt.

Aufgabe der Erfindung ist es, eine Vorrichtung bereit zu stellen, mit der optimal konditioniertes Wasser für den Einsatz in wasserführenden Kreislaufsystemen bereitgestellt wird. Hierbei soll eine Vereinfachung der Regelbarkeit bereitgestellt werden.

Die erfindungsgemäße Lösung dieser Aufgabe erfolgt dadurch, dass am Leitungsweg auslassseitig das Verschneideelement vorgesehen ist, dass in dem Regelventilelement ein Verschlusselement des Regelventilelements den Querschnitt des Leitungsweg durch Eintritt in den Leitungsweg reduziert, dass das Verschneideelement einen Verschnittbereich aufweist, der gedreht zum Leitungsweg vorgesehen ist, dass das Verschneideelement einen Strömungsumlenkungsabschnitt aufweist, der mit dem Leitungsweg verbunden ist und der die Strömungsrichtung des unkonditionierten Wassers in den Verschnittbereich ändert und dass der Verschnittbereich einen Eintrittabschnitt für das konditionerte Wasser aufweist, der so ausgeführt ist, dass das konditionierte Wasser im Wesentlichen radial in der Verschnittbereich eintritt.

Es hat sich als vorteilhaft herausgestellt, dass die Ausfällungs-, Ablagerungs- und Korrosionsproblematik optimal durch die Einstellung der Leitfähigkeit des Wassers aus 50 - 200µs/cm beträgt. Durch die erfindungsgemäße Vorrichtung wird auf einfache Weise eine solche Leitfähigkeit einstellbar, da das Einstellen einer Leitfähigkeit bei Volldurchleitung durch ein Element zur Einstellung der Leitfähigkeit des Wassers sehr aufwendig und kompliziert ist.

Durch die Anordnung der Wasserzuflüsse in das Verschneideelement hat sich überraschender Weise gezeigt, dass eine einfachere Einstellung der Leitfähigkeit möglich ist. Überraschender Weise hat sich gezeigt, dass die Messungen einfacher und präzisier erfolgen können.

Eine weitere Lehre der Erfindung sieht vor, dass der Verschnittbereich im Wesentlichen 90° gedreht zum Leitungsweg vorgesehen ist. Weiterhin ist vorteilhaft, dass der Strömungsumlenkungsabschnitt einen im Wesentlichen um 90° zum Leitungsweg vorgesehen ist, so dass das unkonditionierte Wasser axial in Richtung eines Auslassabschnitts in den Verschnittbereich eintritt. Es hat sich gezeigt, dass hierdurch überraschender Weise eine deutlich besser Vermischung erreichbar ist. Weiterhin ist vorteilhaft, dass das Verschneideelement einen Anschluss für den Leitungsweg aufweist, der eine zylindrische Außenwand aufweist. Es hat sich gezeigt, dass durch das Vorsehen dieser Merkmale einzeln oder in Kombination die Durchmischung besonders verbessert wird.

Eine weitere Lehre der Erfindung sieht vor, dass das Regelventil mit einem Antrieb verbunden ist. Dieses ermöglicht auf einfache Weise ein kontinuierliche Regelung bei sich ändernden Zuständen des zu konditinonierenden Wassers. Gerade das auslassseitige Vorsehen wird hier die Automatisierung deutlich vereinfacht, da hier genauere Messergebnisse bereitgestellt werden.

Eine weitere Lehre der Erfindung sieht vor, dass ein Messsensor zur Messung der Leitfähigkeit des konditionierten Kreislaufwassers vorgesehen ist, und dass der Teilvolumenstrom in Abhängigkeit des Messergebnisses einstellbar ist. Über die Steuerung ist es möglich, direkt in Abhängigkeit der Leitfähigkeit des konditionierten Wassers den hydraulischen Widerstand des Mischelements manuell oder automatisch einzustellen und/oder das Verschneideergebnis zu überwachen. Dabei ist es insbesondre vorteilhaft, wenn an Hand der Überwachung eine Grenzwertüberschreitung der Leitfähigkeit feststellbar ist, so dass in diesem Fall eine Alarmmeldung hinsichtlich des Verbrauchs des Elements zur Einstellung der Leitfähigkeit des Befüllwassers angezeigt wird, und/oder der Betrieb der Vorrichtung eingestellt wird. Hierfür ist vorteilhafterweise ein ansteuerbares Absperrventil vorgesehen. Weiterhin ist vorteilhaft, wenn das Absperrventil als Magnetventil ausgeführt ist. Weiterhin ist vorteilhaft, dass das Absperrventil so ausgeführt ist, dass ein zu hoher Systemdruck im Kreislaufsystem nicht rückwärts durch die Anlage in das Trinkwassersystem drückbar ist. Vorteilhaft ist weiterhin, einen Drucksensor und/oder eine Nutzung eines vorhandenen Drucksensors im Kreislaufsystem vorzusehen, um eine druckabhängige vollautomatische Befüllung des Kreislaufsystems über die dafür ausgelegte Steuerung vorzunehmen. Bei Nutzung dieser zusätzlichen Ausstattung wird gleichzeitig eine Leckageüberwachung ermöglicht.

Eine weitere Lehre der Erfindung sieht vor, dass ein Tank in Verbindung mit einer Pumpe vorgesehen ist. In dem Tank ist vorteilhafterweise eine Flüssigkeit enthalten, die zur weiteren Konditionierung des Befüllwassers dient, um weiteren Korrosionsschutz und dgl. bereit zu stellen.

Eine weitere Lehre der Erfindung sieht vor, dass ein Messsensor zur Messung der Durchflussmenge des konditionierten Wassers vorgesehen ist. Hierdurch wird es möglich, die Konditionierungsflüssigkeit mengengenau abzugeben. Weiterhin wird es ebenfalls möglich, durch die Durchflussmengenmessung die tatsächlich dem Kreislausystem zugeführte konditionierte Wassermenge zu bestimmen.

Eine weitere Lehre der Erfindung sieht vor, dass das Element zur Einstellung der Leitfähigkeit ein lonentauscherharzelement ist. Durch ein solches Element ist es möglich, einen Teilvolumenstrom von vollentsalztem Wasser kostengünstig herzustellen.

Eine weitere Lehre der Erfindung sieht vor, dass die Vorrichtung in einem Gehäuse mit Griff und ausfahrbaren Rollen angeordnet ist. Durch das Vorsehen eines solchen Gehäuses wird es möglich, die erfindungsgemäße Vorrichtung als mobiles Gerät auszuführen, so dass das Gerät zur Befüllung von Kreislaufsystemen im Neuinstallationsbereich und/oder Ergänzungsbefüllung von Kreislaufsystemen temporär vorgesehen wird, wodurch die Kosten zur Bereitstellung des konditionierten Wassers niedrig gehalten werden, da der Kunde nicht für das Gerät bezahlen muss, sondern lediglich mengengenau eine Abrechnung des hergestellten konditionierten Wassers möglich ist. Alternativ ist es möglich, die erfindungsgemäße Vorrichtung stationär vorzusehen.

Nachfolgend wird die Erfindung anhand eines Ausführungsbeispiels mit begleitenden Zeichnungen näher beschrieben. Dabei zeigen:
- Fig. 1:: ein Flussdiagramm einer erfindungsgemäßen Vorrichtung,
- Fig. 2:: eine geschnittene Seitenansicht eines erfindungsgemäßen Mischers mit erfindungsgemäßem Element zur Einstellung der Leitfähigkeit,

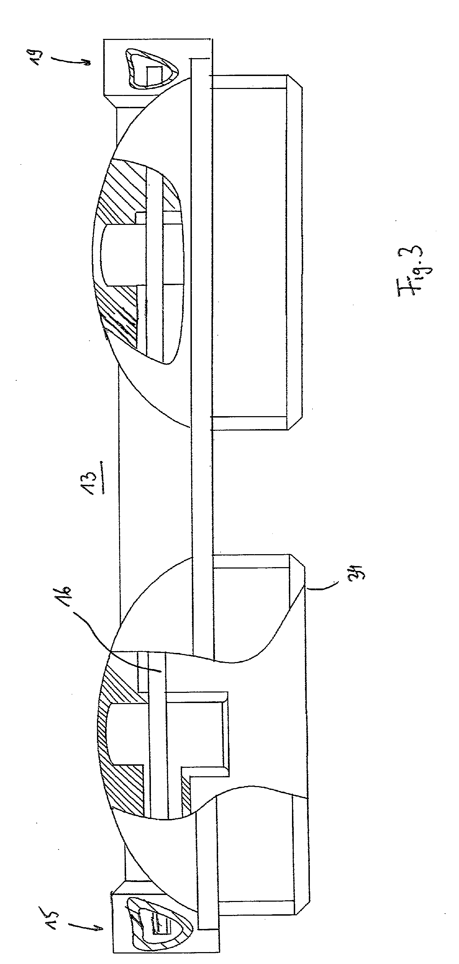

- Fig. 3:: eine teilgeschnittene Seitenansicht eines erfindungsgemäßen Mischers,
- Fig. 4a und 4b: eine Schnittansicht durch zwei Ausführungen eines erfindungsgemäßen Verschneideelement zu Fig. 1,
- Fig. 5:: eine räumliche Ansicht der ersten erfindungsgemäßen Vorrichtung in einem Gehäuse,
- Fig. 6:: eine weitere räumliche Ansicht des Gehäuses,

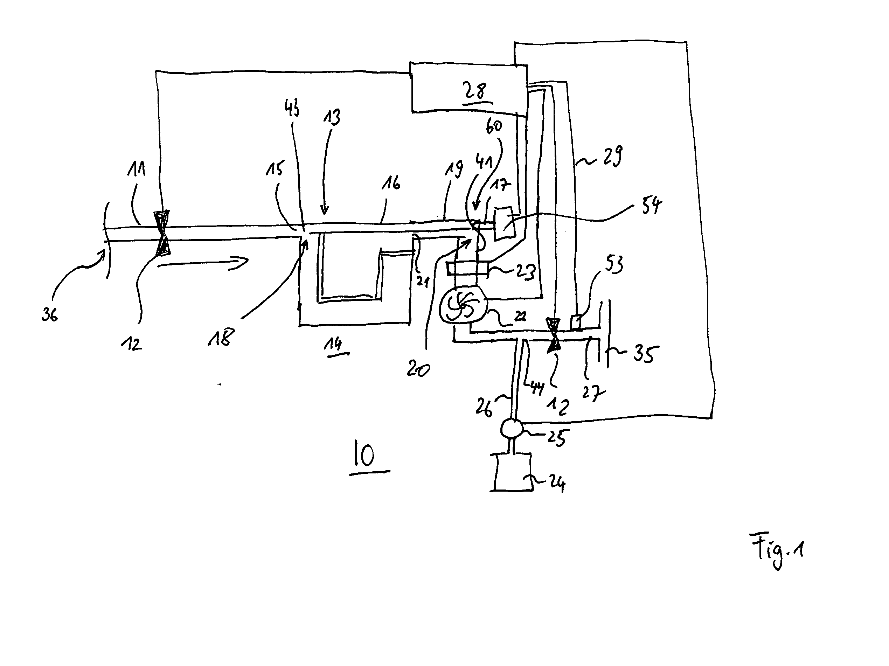

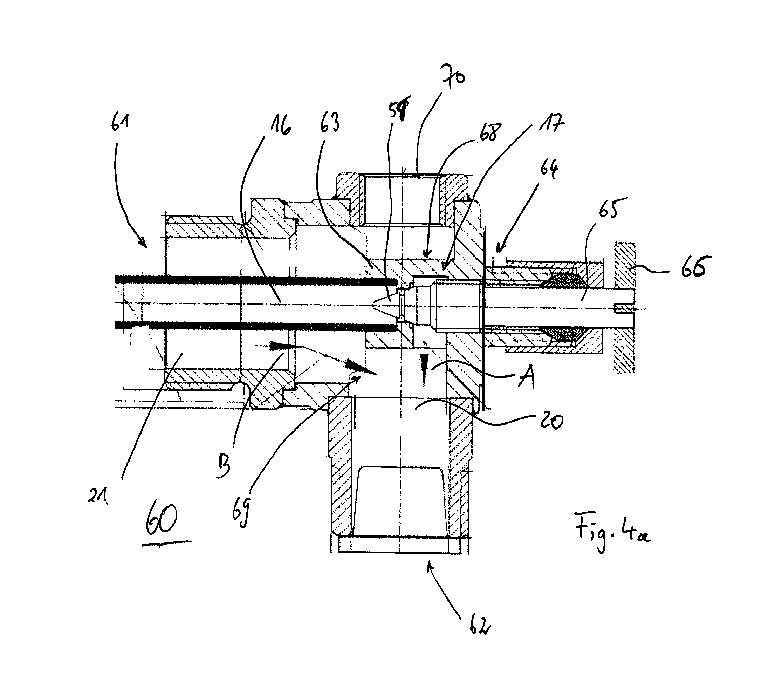

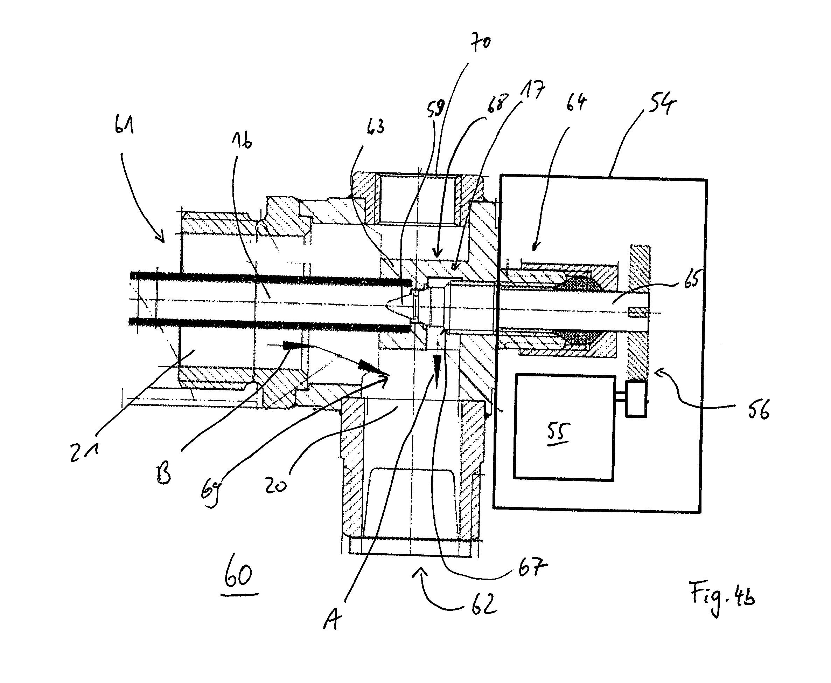

Fig. 1 zeigt eine erfindungsgemäße Konditionierungsvorrichtung 10. An einem Zuleitungsanschluss 11 ist ein Frischwasseranschluss 36 vorgesehen. Im Zuleitungsanschluss 11 ist ein Absperrventil 12 vorgesehen. Der Zuleitungsanschluss 11 mündet in eine Einlassseite 15 eines Mischers 13. Der Mischer 13 ist mit einem Ionentauscher 14 verbunden. Im Mischer 13 ist an einer Einlassseite 15 ein Trennbereich 43 vorgesehen. In diesem Trennbereich 43 beginnt ein Leitungsweg 16, der an seiner Auslassseite in ein Verschneideelement 60 (Fig. 4a, Fig. 4b) mündet, das mit einem Regelventil 17 als Drosselsystem versehen ist. Des Weiteren ist der Trennbereich 43 mit einem lonentauschereinlass 18 des Ionentauschers 14 verbunden.

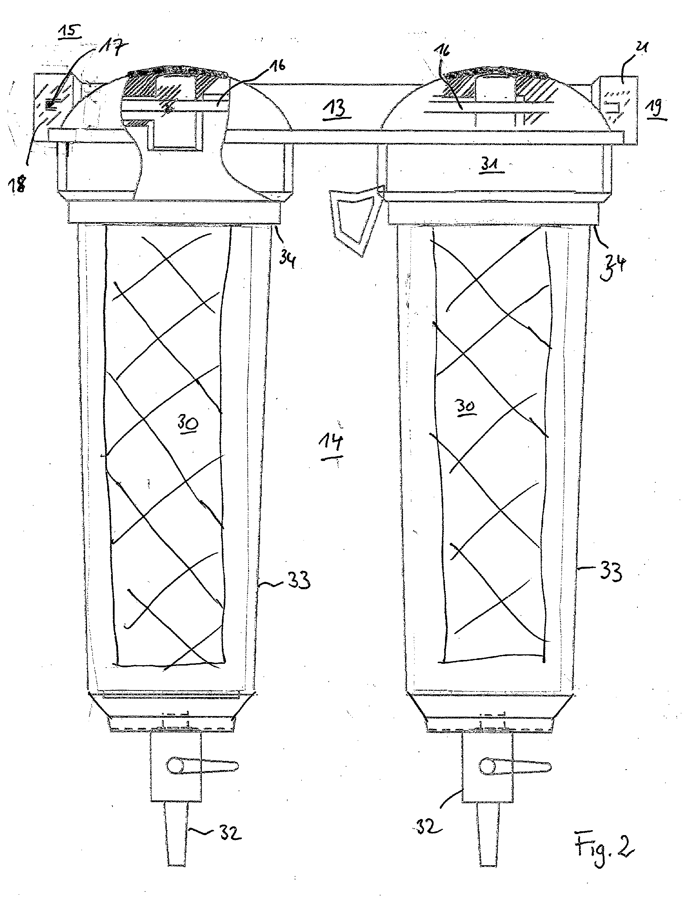

Bestandteil des Mischers 13 sind Deckelelemente 31 (siehe Fig. 2), die einen Gefäßanschluss 34 für ein Gefäß 33 des Ionentauschers 14 aufweisen. Innerhalb des Gefäßes 33 sind lonentauscherharzelemente 30 angeordnet. An der Unterseite des Gefäßes 33 ist ein Auslass 32 vorgesehen, über den beispielsweise für den Austausch von lonentauscherharzelementen 33 der Ionentauscher 14 wasserfrei gemacht werden kann. Das Befüllwasser, das durch den lonentauschereinlass 18 in den Ionentauscher 14 eintritt, durchläuft die lonentauscherharzelemente 30 und wird dabei voll entsalzt/voll enthärtet.

Das so behandelte Wasser tritt am lonentauscherauslass 21 aus und gelangt an der Auslassseite 19 des Mischers 13 in das Verschneideelement 60 mit einem Verschnittbereich 20. Ebenfalls in das Verschneideelement 60 mündet der Leitungsweg 16. An der Auslassseite 19 hinter dem Verschneideelement 60 ist ein Leitung 41 vorgesehen, in dem ein Durchflussmengenmesser 22, ein Leitfähigkeitsmesser 23 und ein Anschluss 44 für eine weitere Leitung 26 vorgesehen sind. Am Ende der Leitung 41 ist ein Ableitungsanschluss 27 vorgesehen. Vor dem Ableitungsanschluss 27 befindet sich ein Absperrventil mit integriertem Rückschlagventil 12. Der Ableitungsanschluss 27 wird mit dem Kreislaufsystem 35 verbunden. Des Weiteren ist eine Steuerung 28 vorgesehen. Die Steuerung 28 ist über elektrische Leitungen 29 mit einem Antriebselement 54 des Regelventils 17 (alternativ sind auch andere Drosselsysteme 17 einsetzbar), dem Durchflussmengenmesser 22, dem Leitfähigkeitsmesser 23, dem Absperrventil 12, gegebenenfalls dem Drucksensor 53 und der Pumpe 25 verbunden.

Fig. 4a und 4b zeigen zwei bevorzugte Ausführungsformen des Verschneideelements 60. Diese weisen einen Einlassabschnitt 61 und einen im Wesentlichen im rechten Winkel dazu angeordneten Auslassabschnitt 62 auf. Innerhalb des Verschneideelements 60 ist ein Anschluss 63 für den Leitungsweg 16 vorgesehen. Der Einlassabschnitt 61 ist mit dem lonentauscherauslass 21 verbindbar. Der Anschluss 63 ist mit einer Buchse 64 des Regelventils 17 verbunden. Die Buchse 64 dient als Aufnahme für den Ventiltrieb 65, an dem in Fig. 4a ein Handrad 66 am Ventiltrieb 65 angeordnet. In Fig. 4b ist ein Antriebselement 54 mit dem Ventiltrieb 65 verbunden, in dem ein Motor 55 über ein Getriebe 56 für das Regelventil 17 angeordnet.

Hinter dem Auslass des Leitungsweges 16 ist ein Strömungsumlenkungsabschnitt 67 vorgesehen, der dem austretenden unkonditionierten Wasser A eine Richtungsänderung in axialer Richtung um im Wesentlichen 90° zum Auslassabschnitt 62 hin erzeugt. Das konditionierte Wasser B wird über einen Eintrittsabschnitt 69 radial in den Verschnittbereich 20 eingeströmt. Dieses erfolgt, wie in Fig. 4a, 4b dargestellt direkt unterhalb des Anschlusses 63 als auch von oben um den Anschluss 63 herum. Daher ist um den Anschluss 63 herum eine zylindrische Außenwand angeordnet, die zusätzlich eine Verbesserung der Vermischung bewirkt. Oberhalb des Ventils 17 ist eine Entlüftungsmöglichkeit 70 vorgesehen.

Die Leitung 26 ist mit einem Tank 24 verbunden, in dem eine Konditionierungsflüssigkeit als Additiv zum leiffähigkeitseingestellten Befüllwasser vorgesehen ist. In der Leitung 26 ist eine Pumpe 25 vorgesehen. Die Konditionierungsflüssigkeit wird über die Pumpe 25 durch die Leitung 26 in die Leitung 41 zugeführt, wodurch die Additive dem Befüllwasser zugeführt werden. Die zugeführte Menge wird über die Steuerung in Abhängigkeit des Messergebnisses des Durchflussmengenmessers 22 eingestellt.

Der hydraulische Widerstand des Leitungsweges 16 wird über das Regelventil o. a. Drosselsysteme 17 eingestellt, in dem ein mit dem Ventiltrieb 65 verbundenes Verschlusselement 59 in den Leitungsweg 16 hinein bewegt oder heraus bewegt wird, wodurch der Leitungsquerschnitt verändert wird. Die Einstellung des Regelventils 17 oder alternativ die Einstellung des Drosselsystems 17 ist abhängig vom Leitfähigkeitsmesserergebnis, das in der Steuerung 28 ausgewertet wird. Die gewünschte Leitfähigkeit des verschnittenen Befüllwassers soll beispielsweise 50 - 200 µS/cm betragen. Je nach Entsalzungsgrad des aus dem lonentauscherauslass 21 austretenden Befüllwassers ist es notwendig, die Blende zu ändern bzw. Drosselsystemeinstellung anzupassen, um diesen Wert zu erreichen.

Wird ein voreingestellter Grenzwert für die Leitfähigkeit erreicht, ist davon auszugehen, dass die lonentauscherharzelemente 30 verbraucht sind und ausgetauscht oder regeneriert werden müssen. Die Steuerung betätigt dafür nach vorheriger Voralarmmeldung das Absperrventile 12, so dass ein weiterer Konditionierungsbetrieb nicht mehr möglich ist. Diese Sperrung kann erst nach Austausch / nach der Regenerierung der lonentauscherharzelemente 30 wieder aufgehoben werden. Alle Störmeldungen können potentialfrei an eine Gebäudeleittechnik (sofern vorhanden) weitergeleitet werden.

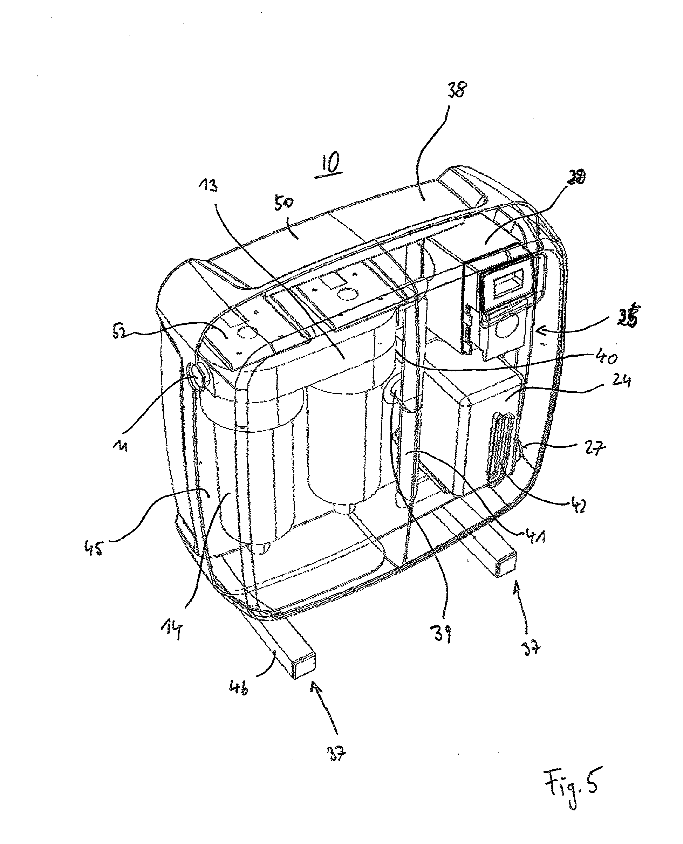

In Fig. 5 ist die zuvor beschriebene Konditionierungsvorrichtung 10 in einem Gehäuse 38 dargestellt, wobei von dem Gehäuse 38 nur die hintere Gehäuseschale 50 dargestellt ist. Verbunden mit der hinteren Gehäuseschale 50 ist eine Grundplatte 45, auf der die Elemente montiert werden. Die notwendigen Elektroleitungen 29 sind auf der Rückseite der Grundplatte 45 vorgesehen. Auf der Grundplatte 45 sind Halteelemente 52 angeordnet, über die beispielsweise Mischer 13, Ionentauscher 14, Tank 24, Pumpe 25 oder Steuerung 28 mit der Grundplatte 45 verbunden sind. Der Tank 24 ist mit einem Füllstandsanzeiger 42 versehen. Für den Füllstandsanzeiger 42 des Tanks 24 ist im Gehäuse 38 eine Öffnung (nicht dargestellt) vorgesehen.

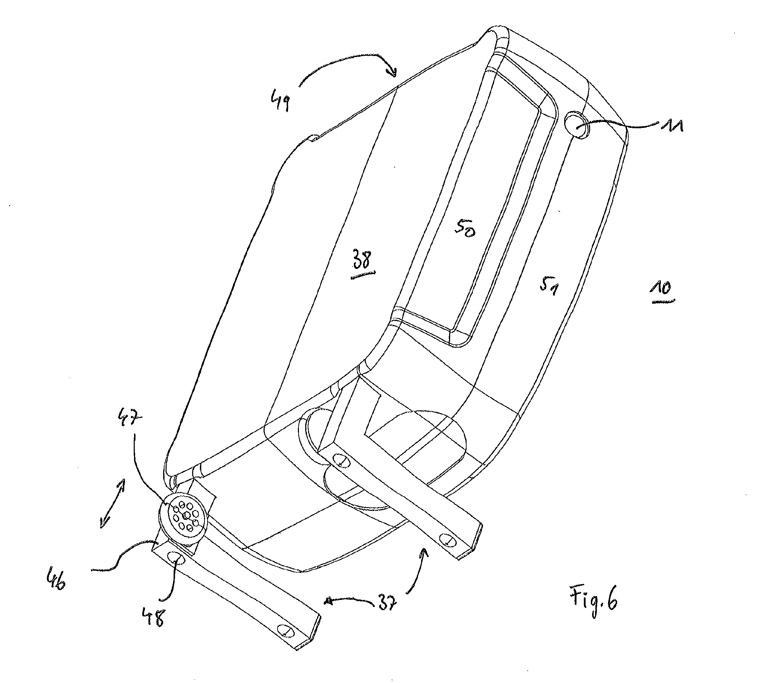

Fig. 6 zeigt eine räumliche Ansicht der Konditionierungsvorrichtung 10 im geschlossenen Gehäuse 38. Auf der Unterseite des Gehäuses 38, das aus der hinteren Gehäuseschale 50 und der vorderen Gehäuseschale 51 zusammengesetzt ist, sind Mobilitätselemente 37 vorgesehen. Das Mobilitätselement 37 besteht aus einem Grundträger 46, auf dem Rollen 47 und Standelemente 48 angeordnet sind. Der Grundträger 46 ist L-förmig ausgeführt, so dass ein sicherer Stand des Gehäuses 38 im mobilen Einsatz gewährleistet ist. In der in Fig. 6 angegebenen Pfeilrichtung kann der Grundträger 46 aus der hinteren Gehäuseschale 50 ein- und ausgefahren werden. Optional ist der Grundträger 46 aus der hinteren Gehäuseschale 50 vollständig entnehmbar. Von der Oberseite des Gehäuses 38 ist ein Griff 49 vorgesehen, so dass die Konditionierungsvorrichtung 10 als mobile Vorrichtung ausgeführt ist. Soll die Konditionierungsvorrichtung 10 permanent in einen Heizungskreislauf 35 integriert werden, so lassen sich die Grundträger 46 aus der hinteren Gehäuseschale 50 entfernen und die hintere Gehäuseschale 50 fest an der Wand montieren oder wahlweise ist eine Adaption auf handelsübliche Konsolen möglich.

**Bezugszeichenliste:**

| | | | |
|---|---|---|---|
| 10 | Konditionierungsvorrichtung | 46 | Grundträger |
| 11 | Zuleitungsanschluss | 47 | Rolle |
| 12 | Absperrventil | 48 | Standelement |
| 13 | Mischer | 49 | Griff |
| 14 | Ionentauscher | 50 | hintere Gehäuseschale |
| 15 | Einlassseite | 51 | vordere Gehäuseschale |
| 16 | Leitungsweg | 52 | Halteelement |
| 17 | Regelventil/Drosselsystem | 53 | Drucksensor |
| 18 | lonentauschereinlass | 54 | Antriebselement |
| 19 | Auslassseite | 55 | Motor |
| 20 | Verschnittbereich | 56 | Getriebe |
| 21 | lonentauscherauslass | | |
| 22 | Durchflussmengenmesser | 59 | Verschlusselement |
| 23 | Leitfähigkeitsmesser | 60 | Verschneideelement |
| 24 | Tank | 61 | Einlassabschnitt |
| 25 | Pumpe | 62 | Auslassabschnitt |
| 26 | Leitung | 63 | Anschluss |
| 27 | Ableitungsanschluss | 64 | Buchse |
| 28 | Steuerung | 65 | Ventiltrieb |
| 29 | Elektroleitung | 66 | Handrad |
| 30 | lonentauscherharzelement | 67 | Strömungsumlenkungsabschnitt |
| 31 | Deckelelement | 68 | Außenwand |
| 32 | Auslass | 69 | Eintrittsabschnitt |
| 33 | Gefäß | 70 | Entlüftung |
| 34 | Gefäßanschluss | | |
| 35 | Heizungskreislauf | A | unkonditioniertes Wasser |
| 36 | Frischwasseranschluss | B | konditioniertes Wasser |
| 37 | Mobilitätselement | | |
| 38 | Gehäuse | | |
| 39 | Durchflussmesser | | |
| 40 | Leitfähigkeitsmesser | | |
| 41 | Leitung | | |
| 42 | Füllstandsanzeiger | | |
| 43 | Trennbereich | | |
| 44 | Anschluss | | |
| 45 | Grundplatte | | |

## Patentansprüche

1. Vorrichtung zum Konditionieren von Wasser zum Befüllen von wasserführenden Kreislaufsystemen mit wenigstens einem Zuleitungsanschluss (11) für das Befüllwasser, und einem Ableitungsanschluss (27) für das konditionierte Kreislaufwasser, einem Element (14) zur Einstellung der Leitfähigkeit des konditionierten Kreislaufwassers, und einem Steuerelement (28), wobei die Vorrichtung (10) so ausgeführt ist, dass mittels eines Mischerelements (13) mit einem Leitungsweg (16) ein Teilvolumenstrom des eingeleiteten Befüllwassers am Element (14) zur Einstellung der Leitfähigkeit vorbeiführbar ist, und mit dem in dem Element (14) zur Einstellung der Leitfähigkeit konditionierten Wasser in einem Verschnittbereich (20) verschneidbar ist, wobei der hydraulischer Widerstand des Mischelements (13) zur Einstellung des Teilvolumenstromes einstellbar ist, wobei zur Einstellung des Teilvolumenstromes über den hydraulischen Widerstand des Mischelements (13) am Leitungsweg (16) ein Verschneideelement (60) vorgesehen ist, das ein Regelventilelement (17) beinhaltet, über das die Durchflussmenge einstellbar ist, **dadurch gekennzeichnet, dass** am Leitungsweg (16) auslassseitig das Verschneideelement (60) vorgesehen ist, dass in dem Regelventilelement (17) ein Verschlusselement (55) des Regelventilelements (17) den Querschnitt des Leitungsweg (16) durch Eintritt in den Leitungsweg (16) reduziert, dass das Verschneideelement (60) einen Verschnittbereich (20) aufweist, der gedreht zum Leitungsweg (16) vorgesehen ist, dass das Verschneideelement (60) einen Strömungsumlenkungsabschnitt (67) aufweist, der mit dem Leitungsweg (16) verbunden ist und der die Strömungsrichtung des unkonditionierten Wassers (A) in den Verschnittbereich (20) ändert und dass der Verschnittbereich (20) einen Eintrittabschnitt (69) für das konditionierte Wasser aufweist, der so ausgeführt ist, dass das konditionierte Wasser (B) im Wesentlichen radial in der Verschnittbereich (20) eintritt.

2. Vorrichtung nach Anspruch 1, **dadurch gekennzeichnet, dass** ein Messsensor (23) zur Messung der Leitfähigkeit des konditionierten Kreislaufwassers vorgesehen ist, wobei der Teilvolumenstrom des vorbeigeführten Befüllwassers in Abhängigkeit des Messergebnisses einstellbar ist und/oder dass ein Messsensor (22) zur Messung der Durchflussmenge des konditionierten Kreislaufwassers vorgesehen ist.

3. Vorrichtung nach Anspruch 1 oder 2, **dadurch gekennzeichnet, dass** das Element (14) zur Einstellung der Leitfähigkeit ein lonentauscherharzelement (30) beinhaltet.

4. Vorrichtung nach einem der Ansprüche 1 bis 3, **dadurch gekennzeichnet, dass** ein Tank (24) in Verbindung mit einer Pumpe (25) vorgesehen ist.

5. Vorrichtung nach einem der Ansprüche 1 bis 4, **dadurch gekennzeichnet, dass** die Vorrichtung in einem Gehäuse (38) mit Griff (49) und ausfahrbaren Rollen (47) angeordnet ist.

6. Vorrichtung nach einem der Ansprüche 1 bis 5, **dadurch gekennzeichnet, dass** der Verschnittbereich (20) im Wesentlichen 90° gedreht zum Leitungsweg (16) vorgesehen ist.

7. Vorrichtung nach einem der Ansprüche 1 bis 6, **dadurch gekennzeichnet, dass** der Strömungsumlenkungsabschnitt (67) einen im Wesentlichen um 90° zum Leitungsweg (16) vorgesehen ist, so dass das unkonditionierte Wasser (A) axial in Richtung eines Auslassabschnitts (62) in den Verschnittbereich (20) eintritt.

8. Vorrichtung nach einem der Ansprüche 1 bis 7, **dadurch gekennzeichnet, dass** das Verschneideelement (60) einen Anschluss (63) für den Leitungsweg (16) aufweist, der eine zylindrische Außenwand (68) aufweist.

9. Vorrichtung nach einem der Ansprüche 1 bis 8, **dadurch gekennzeichnet, dass** das Regelventil (17) mit einem Antrieb (54) verbunden ist.
